(19) Europäisches Patentamt
European Patent Office
Office européen des brevets

(11) Veröffentlichungsnummer: **0 146 000**
**B1**

(12) # EUROPÄISCHE PATENTSCHRIFT

(45) Veröffentlichungstag der Patentschrift: **15.07.87**

(51) Int. Cl.⁴: **D 21 H 3/38** // C08F8/00

(21) Anmeldenummer: **84114102.1**

(22) Anmeldetag: **22.11.84**

(54) **Verfahren zur Herstellung von Papier, Karton und Pappe mit hoher Trocken-, Nass- und Laugenfestigkeit.**

(30) Priorität: **29.11.83 DE 3343105**

(43) Veröffentlichungstag der Anmeldung: **26.06.85 Patentblatt 85/26**

(45) Bekanntmachung des Hinweises auf die Patenterteilung: **15.07.87 Patentblatt 87/29**

(84) Benannte Vertragsstaaten: **AT BE CH DE FR GB IT LI NL SE**

(56) Entgegenhaltungen:
**DE - A - 2 434 384**
**DE - B - 1 210 313**
**DE - B - 1 223 247**
**US - A - 3 976 824**

(73) Patentinhaber: **BASF Aktiengesellschaft, Carl-Bosch-Strasse 38, D-6700 Ludwigshafen (DE)**

(72) Erfinder: **Pfohl, Sigberg, Dr., Am Maulbeerstueck 14, D-6720 Speyer (DE)**
Erfinder: **Hartmann, Heinrich, Dr., Weinheimer Strasse 46, D-6703 Limburgerhof (DE)**
Erfinder: **Proll, Theo, Dr., Mozartstrasse 30, D-6702 Bad Duerkheim (DE)**
Erfinder: **Klahr, Erhard, Dr., Londoner Ring 11, D-6700 Ludwigshafen (DE)**

**EP 0 146 000 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Um nassfestes Papier herzustellen, werden in der Praxis dem Papierstoff im neutralen oder schwach alkalischen pH-Bereich fast ausschliesslich Harze zugesetzt, die durch Umsetzung von Epichlorhydrin mit langkettigen basischen Polyamidoaminen hergestellt werden, vgl. US-A-2 926 116. Da die den Harzen zugrundeliegende Polyamidkette relativ leicht hydrolytisch gespalten wird, haben diese Harze den Nachteil, dass sie eine nur relativ geringe Lagerstabilität aufweisen. Die Alkalifestigkeit der mit diesen Harzen behandelten Papiere ist verbesserungsbedürftig.

Aus der US-A-3 700 623 sind Harze bekannt, die durch Umsetzung von Epichlorhydrin mit Polymerisaten aus Diallylaminen hergestellt werden. Solche Produkte ermöglichen die Herstellung von Papieren mit hoher Trocken-, Nass- und Laugenfestigkeit. Die Harze sind jedoch sehr teuer und haben deshalb noch keinen Eingang in die Praxis gefunden. Ein Nachteil dieser Harze ist, dass sie in der Papierfabrik erst mit Laugen aktiviert werden müssen, um eine optimale Wirksamkeit zu erreichen. Die Harze haben ausserdem den Nachteil, dass sie zu einer starken Weisseabtrübung des damit behandelten Papiers führen.

Aus der US-PS 3 976 824 ist ein Verfahren zur Herstellung von Reaktionsprodukten bekannt, bei dem man zunächst ein Amidgruppen enthaltendes kationisches Copolymerisat mit einem Polyalkylenimin, das einen Polymerisationsgrad von nicht weniger als 20 hat, umsetzt oder die so erhaltenen Reaktionsprodukte zusätzlich noch mit einem Epihalohydrin, z.B. Epichlorhydrin unter Bildung von wärmehärtbaren Kondensationsprodukten umsetzt. Die so hergestellten Reaktionsprodukte werden bei der Herstellung von Papier dem Papierstoff als Mittel zur Erhöhung der Festigkeit von Papier zugesetzt.

Der Erfindung liegt die Aufgabe zugrunde, Harze zur Verfügung zu stellen, die bei Zugabe zum Papierstoff im neutralen bis schwach alkalischen pH-Bereich die Trocken-, Nass- und Laugenfestigkeit des so hergestellten Papiers erhöhen. Die Harze sollen direkt ohne Aktivierung anwendbar sein und ausserdem nicht zu einer Weissabtrübung des Papiers führen.

Die Aufgabe wird erfindungsgemäss gelöst mit einem Verfahren zur Herstellung von Papier, Karton und Pappe mit hoher Trocken-, Nass- und Laugenfestigkeit durch Zusatz wässriger Polymerisatlösungen zum Papierstoff in einer Menge von 0,1 bis 5 Gew.-%, jeweils bezogen auf die Feststoffe und Entwässern des Papierstoffs auf einem Sieb unter Blattbildung, wenn man als wässrige Polymerisatlösungen die Reaktionsprodukte einsetzt, die durch Umsetzung von

(1) Homopolymerisaten des Vinylimidazols der Formel I

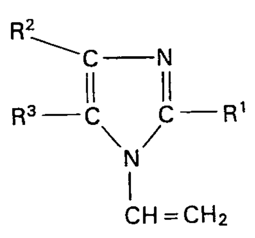

(I),

in der $R^1$, $R^2$, $R^3$ = H, $CH_3$; und $R^1$ ausserdem $C_2H_5$, $C_3H_7$, $C_4H_9$ bedeuten oder von

(2) wasserlöslichen Copolymerisaten aus

a) mindestens 10 Gew.-% eines Vinylimidazols der Formel I,
b) bis zu 90 Gew.-% Acrylamid und/oder Methacrylamid sowie gegebenenfalls
c) bis zu 30 Gew.-% Acrylnitril, Methacrylnitril, Vinylacetat, Vinylpyrrolidon, einer ethylenisch ungesättigten $C_3$ bis $C_5$ Carbonsäure oder deren Ester

in Abwesenheit von Polyalkyleniminen mit Epichlorhydrin im Verhältnis von 0,02 bis 2,9 Mol Epichlorhydrin pro Mol basischem Stickstoffäquivalent im Homo- oder Copolymerisat erhalten werden.

Homo- und Copolymerisate des Vinylimidazols sind bekannt. Sie werden beispielsweise durch Polymerisieren von Vinylimidazolen der Formel I

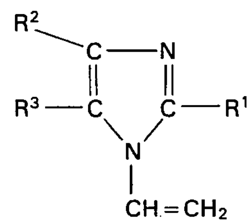

(I),

in der $R^1$, $R^2$, $R^3$ = H, $CH_3$; und $R^1$ ausserdem $C_2H_5$, $C_3H_7$, $C_4H_9$ bedeuten, in wässriger Lösung in Gegenwart von radikalischen Polymerisationsinitiatoren bei Temperaturen von 40 bis 100, vorzugsweise 60 bis 100°C erhalten. $R^1$ kann im Fall von $C_3$-Alkyl, n- oder Isopropyl und im Fall $C_4$-Alkyl n, iso- oder tert.-Butyl sein.

Für die Herstellung von Copolymerisaten des Vinylimidazols werden als Komponente (a) mindestens 5 Gew.-% eines Vinylimidazols der Formel I verwendet, während man als Komponente (b) der Copolymerisate bis zu 95 Gew.-% Acrylamid und/oder Methacrylamid einsetzt. Bevorzugt werden Copolymerisate aus (a) 15 bis 30 Gew.-% eines Vinylimidazols der Formel I, in der $R^1$, $R^2$ und $R^3$ H oder $R^2$ und $R^3$ H und $R^1$ Methyl bedeuren oder eine Mischung der Monomeren und (b) 85 bis 70 Gew.-% Acrylamid als Ausgangspolymerisat für die Herstellung der Nassfestharze verwendet.

Die Copolymerisate können z.B. dadurch modifiziert sein, dass sie als Komponente (c) bis zu 30 Gew.-% Acrylnitril, Methacrylnitril, Vinylacetat, Vinylpirrolidon, einer ethylenisch ungesättigten $C_3$ bis $C_5$ Carbonsäure oder deren Ester einpolymerisiert enthalten. Die Monomeren der Komponente (c) werden in einer solchen Menge eingesetzt, dass die entstehenden Copolymerisate noch wasserlöslich sind. Daher werden beispielsweise langkettige Ester von ethylenisch ungesättigten $C_3$- bis $C_5$-Carbonsäuren nur in einer Menge bis zu etwa 5 Gew.-% einpolymerisiert während Acrylsäuremethylester oder Acrylnitril bis zu 30 Gew.-% am Aufbau der Copolymerisate beteiligt sein können. Zur Modifizierung der Copolymerisate können auch mehrere der unter (c) genannten Monomeren gleichzeitig bei der Polymerisation eingesetzt werden, z.B. Acrylnitril und Acrylsäure, Acrylnitril, Vinylacetat und Vinylpyrrolidon oder Acrylsäure und Acrylsäureester.

Die Homo- und Copolymerisate des Vinylimidazols haben K-Werte von 30 bis 150, vorzugsweise 60 bis 120 (bestimmt nach H. Fikentscher an 0,1 %igen Polymerlösungen in 5%iger wässriger Kochsalzlösung bei 20°C). Sie werden in wässrigem Medium mit Epichlorhydrin zu Harzen umgesetzt. Pro Mol basischem Stickstoffäquivalent im Polymerisat verwendet man 0,02 bis 2,9, vorzugsweise 1,0 bis 2,5 Mol Epichlorhydrin. Die Harze werden vorzugsweise so hergestellt, dass man zu einer wässrigen Lösung des Homo- oder Copolymerisats einer Verbindung der Formel I Epichlorhydrin zusetzt und die Mischung solange miteinander reagieren lässt, bis kein Epoxid mehr nachweisbar ist. Um die Reaktion einwandfrei kontrollieren zu können, erfolgt die Epichlorhydrinzugabe kontinuierlich oder absatzweise. Die Reaktionstemperatur liegt zwischen 0 und 100, vorzugsweise zwischen 20 und 80°C. Die Reaktionszeiten betragen etwa 2 bis 6 Stunden. Die Kondensation erfolgt bei pH-Werten von 5 bis 10. Um stabile Harzlösungen zu erhalten, wird der pH-Wert der wässrigen Lösung vor oder nach beendeter Kondensation auf einen Wert in dem Bereich von 2 bis 4 eingestellt. Für diese Einstellung des pH-Wertes verwendet man vorzugsweise Schwefelsäure oder Ameisensäure. Die gebrauchsfertigen wässrigen Harzlösungen haben einen Feststoffgehalt von 10 bis 20 Gew.-% und eine Viskosität von 100 bis 5000 m.Pas. (gemessen in 10%iger Lösung nach Brookfield, 20 UpM, 20°C).

Die wässrigen Harzlösungen können direkt oder gegebenanfalls nach einem weiteren Verdünnen mit Wasser — sie sind in jedem Verhältnis mit Wasser verdünnbar — bei der Herstellung von Papier verwendet werden. Sie werden dazu dem Papierstoff vor der Blattbildung in einer Menge, jeweils bezogen auf die Feststoffe, von 0,1 bis 5, vorzugsweise 0,25 bis 1 Gew.-%, zugesetzt. Sofern man die wässrigen Harzlösungen in einer Menge von 0,005 bis 0,1 %, jeweils bezogen auf trockenes Fasermaterial und 100%iges Harz, den Papierstoff kurz vor dem Stoffauflauf zusetzt, stellen diese Harze hervorragende Krepphilfsmittel, z.B. für Hygienepapiere dar.

Die erfindungsgemäss zu verwendenden Harzlösungen werden der Faseraufschlämmung unter den üblichen Bedingungen der Papierfabrikation zugesetzt. Die Harze sind bei allen bekannten Papier-, Pappe- und Kartonqualitäten wirksam, z.B. bei der Herstellung von Schreib-, Druck- und Verpackungspapieren. Die Papiere bzw. Pappen und Kartons können aus einer Vielzahl von Fasermaterialien hergestellt sein, beispielsweise aus Sulfit- oder Sulfat-Zellstoff (gebleicht oder ungebleicht, Holzschliff oder Altpapier oder Mischungen der genannten Faserarten). Der pH-Wert der Stoffsuspension beträgt 4 bis 9, vorzugsweise 6 bis 8. Es ist auch möglich, die Harzlösungen auf die Oberfläche des bereits gebildeten Papiers, z.B. in der Leimpresse, aufzutragen.

Die in den folgenden Beispielen angegebenen Teile sind Gewichtsteile, die Prozentangaben beziehen sich auf das Gewicht der Stoffe.

Die Blätter wurden in einem Rapid-Köthen Laborblattbildner hergestellt. Die Trockenreisslänge wurde gemäss DIN 53 112, Blatt 1 und die Nassreisslänge gemäss DIN 53 112, Blatt 2, bestimmt.

Die Laugenfestigkeit wurde in der gleichen Weise bestimmt wie die Nassfestigkeit, wobei anstelle von Wasser eine 1 %ige Natronlaugelösung zur Tränkung der Papiere (5 min bei 50°C) verwendet wurde.

Die Weisse der Papierblätter wurde mit Hilfe eines Reflektionsfotometers (Elrefo-Gerät) nach DIN 53 145 bestimmt.

Der K-Wert der Polymerisate wurde nach H. Fikentscher, Cellulosechemie 13, 58-64 und 71-74 (1932), bei einer Temperatur von 20°C in 5%igen wässrigen Kochsalzlösungen bestimmt; dabei bedeutet $K = k \cdot 10^3$.

Herstellung der Harzlösungen

*Harz 1*

a) Herstellung einer wässrigen Lösung eines Homopolymerisates von N-Vinylimidazol

In einem Polymerisationsgefäss wurden 500 Teile Vinylimidazol und 450 Teile Wasser vorgelegt und unter Hindurchleiten von Stickstoff bei einer Temperatur von 100°C innerhalb von 1 Stunde mit 8 Teilen tert.-Butylperethylhexanoat in 40 Teilen Methanol versetzt. Nach beendeter Zugabe des Polymerisationsinitiators wurde das Reaktionsgemisch 7 Stunden bei einer Temperatur von 91°C nachpolymerisiert und anschliessend durch Zugabe von Wasser auf einen Feststoffgehalt von 30,3% verdünnt. Man erhielt eine braune, schwach trübe, stark viskose Polymerlösung. Der K-Wert des Homopolymerisates betrug 86.

b) Umsetzung des Homopolymerisates mit Epichlorhydrin

878 g einer 30,3%igen wässrigen Lösung des gemäss a) erhaltenen Poly-N-vinylimidazols (entsprechend 2,7 Äquivalenten basischen Stickstoffs) wurden mit 1630 g Wasser verdünnt und mit 677 g (7,3 Mol) Epichlorhydrin bei Raumtemperatur versetzt und gerührt. Dabei stieg die Viscosität der Lösung langsam an. Nach 30 min gab man 193 g Schwefelsäure (2 Mol) zu, worauf sich ein pH-Wert von 2 einstellte. Die Reaktionsmischung wurde auf 80°C erwärmt und 4 Stunden bei dieser Temperatur gerührt, wobei man portionsweise 2100 g Wasser zusetzte. Man erhielt eine wässrige Lösung des Harzes 1, die einen Feststoffgehalt von 17,2% und einen pH-Wert von 1,7 hatte. Die Viskosität der wässrigen Lösung betrug 380 mPas.

*Harz 2*

a) Herstellung einer wässrigen Copolymerisatlösung

In einem Polymerisationsgefäss wurden 250 Teile Wasser vorgelegt und unter Rühren und Hindurchleiten von Stickstoff aus zwei getrennten Zulaufgefässen die Zuläufe I und II gleichzeitig bei einer Temperatur von 90°C innerhalb einer Stunde zugegeben. Der Zulauf I bestand aus 150 Teilen Acrylamid, 150 Teilen Vinylimidazol und 150 Teilen Wasser, während der Zulauf II eine Lösung von 3 Teilen 2,2'-Azo-

bis(2-amidinopropan)-dihydrochlorid in 47 Teilen Wasser war. Das Reaktionsgemisch wurde anschliessend bei einer Temperatur von 90°C 4 Stunden lang nachpolymerisiert und durch Zugabe von Wasser auf einen Feststoffgehalt von 30,3% eingestellt. Der K-Wert des Copolymerisates betrug 68.

b) Umsetzung des Copolymerisates mit Epichlorhydrin

233 g (entsprechend 0,4 Äquivalenten basischen Stickstoffs) der 30,3%igen wässrigen Lösung des Copolymeren gemäss a) wurden mit 286,5 g Wasser verdünnt und mit 41,6 g (0,45 Mol) Epichlorhydrin bei Raumtemperatur versetzt. Das Reaktionsgemisch wurde anschliessend langsam auf 75°C erwärmt. Nach 60 min war die Viskosität des Reaktionsgemisches deutlich angestiegen. Es wurde dann mit 44 g (0,8 Mol) unter 85%iger Ameisensäure auf einen pH-Wert von 2 eingestellt und weitere 2 Stunden bei einer Temperatur von 75°C gerührt. Nach dieser Zeit war die Reaktion beendet. Das Reaktionsgemisch wurde durch Zugabe von 200 g Wasser auf einen Feststoffgehalt von 15% eingestellt. Die wässrige Lösung des Harzes 2 hatte eine Viskosität von 230 mPas. und einen pH-Wert von 3,0.

*Harz 3*

a) Herstellung einer wässrigen Copolymerisatlösung

In einem Polymerisationsgefäss wurden 125 Teile Wasser vorgelegt und unter Rühren und Hindurchleiten von Stickstoff auf eine Temperatur von 80°C erhitzt. Sobald die Temperatur von 80°C erreicht war, fügte man kontinuierlich zwei verschiedene Zuläufe innerhalb einer Stunde der Vorlage zu. Der Zulauf I bestand aus einer Lösung von 225 Teilen Acrylamid und 75 Teilen N-Vinylimidazol in 225 Teilen Wasser, während der Zulauf II eine Lösung von 3 Teilen 2,2'-Azobis(2-amidinopropan)-dihydrochlorid in 47 Teilen Wasser war. Nach Beendigung der Zugabe von Monomeren und Initiator wurde das Reaktionsgemisch noch 4 Stunden bei einer Temperatur von 80°C nachpolymerisiert und anschliessend durch Zugabe von Wasser auf einen Feststoffgehalt von 10,1% eingestellt. Der K-Wert des Copolymerisats betrug 84.

b) Umsetzung des Copolymerisates a) mit Epichlorhydrin

297,6 g (entsprechend 0,1 Äquivalenten basischen Stickstoffs) der 10,1%igen wässrigen Lösung des Copolymerisates a) wurden mit 150 g Wasser, 16,7 g (0,18 Mol) Epichlorhydrin und 9,7 g (0,18 Mol) 85%iger Ameisensäure versetzt und auf eine Temperatur von 75°C erwärmt. Nach einer Reaktionszeit von 4 Stunden bei 75°C erhielt man eine 8,4%ige wässrige des Harzes 3, die eine Viskosität von 3800 mPas. und einen pH-Wert von 3,6 hatte.

*Harz 4*

a) Herstellung einer wässrigen Copolymerisatlösung

In einem Polymerisationsgefäss wurden 145 Teile Wasser vorgelegt und unter Rühren unf Hindurchleiten von Stickstoff auf eine Temperatur von 80°C erhitzt. Nachdem das vorgelegte Wasser eine Temperatur von 80°C erreicht hatte, fügte man gleichzeitig innerhalb einer Stunde die Zuläufe I und II hinzu. Der Zulauf I bestand aus einer Lösung von 255 Teilen Acrylamid, 45 Teilen N-Vinylimidazol in 255 Teilen Wasser während es sich bei dem Zulauf II um eine Lösung von 1,5 g 2,2'-Azo-bis(2-amidinopropan)-dihydrochlorid in 48,5 Teilen Wasser handelte. Nach Zugabe der M onomeren und des Initiators wurde das Reaktionsgemisch noch 4 Stunden bei 80°C nachpolymerisiert und anschliessend durch Zugabe von Wasser auf einen Feststoffgehalt von 5% verdünnt. Der K-Wert des Copolymerisates betrug 113.

b) Umsetzung des Copolymeren a) mit Epichlorhydrin

894,6 g (entsprechend 0,08 Äquivalenten basischen Stickstoffs) der oben beschriebenen 5%igen wässrigen Lösung des Copolymeren a) wurde bei Raumtemperatur mit 6,9 g (0,13 Mol) 85%iger Ameisensäure und 11,8 g (0,13 Mol) Epichlorhydrin versetzt. Man erwärmte die Reaktionsmischung auf eine Temperatur von 80°C und rührte sie 5 Stunden bei dieser Temperatur. Man erhielt eine wässrige Lösung des Harzes 4, die einen Feststoffgehalt von 6,0% und einen pH-Wert von 3,6 hatte. Die Viskosität betrug 600 mPas.

*Beispiel 1*

Aus 100% Fichtensulfitzellstoff wurde eine 0,5%ige Stoffsuspension in Wasser hergestellt. Der pH-Wert der Suspension betrug 7,5, der Mahlgrad 35°SR. Die Stoffsuspension wurde in drei gleiche Teile geteilt und jeweils unter folgenden Bedingungen zu Blättern einer Flächenmasse von 80 g/m$^2$ verarbeitet:

a) Der Stoffsuspension wurde nichts zugesetzt.
b) Der Stoffsuspension wurde 1%, jeweils bezogen auf die Feststoffe, einer wässrigen Lösung eines handelsüblichen Neutralnassfestharzes auf Basis eines Umsetzungsproduktes von Epichlorhydrin und einem Polyamidoamin aus Diethylentriamin und Adipinsäure zugesetzt. Das Neutralnassfestharz wurde gemäss Beispiel 1 der US-A-2 926 116 hergestellt.
c) Der Stoffsuspension wurde 1%, jeweils bezogen auf die Feststoffe, des oben beschriebenen Harzes 3 zugesetzt.

Von den drei gemäss a) bis c) erhaltenen Blättern wurde die Trockenreisslänge, die Nassreisslänge, die Laugenfestigkeit und die Weisse geprüft. Die Ergebnisse sind in Tabelle 1 zusammengefasst.

TABELLE 1

| | a) | b) | c) |
|---|---|---|---|
| Trockenreisslänge | 4450 | 5340 | 5990 |
| Nassreisslänge (m) Papier ungealtert | 0 | 1120 | 1190 |

TABELLE 1 (Fortsetzung)

| | a) | b) | c) |
|---|---|---|---|
| Nassreisslänge (m) Papieralterung 5 min 110°C | 120 | 1520 | 1450 |
| Laugenfestigkeit 1% Natronlauge 5 min 50°C Papier ungealtert | 0 | 725 | 980 |
| Laugenfestigkeit 1% Natronlauge 5 min 50°C Papieralterung 5 min 50°C | 0 | 1020 | 1090 |
| Weisse % Remissionsgrad | 80,5 | 69,0 | 73,5 |

*Beispiel 2*

Aus 100% gemischtem Altpapier wurde eine 0,5%ige wässrige Stoffsuspension hergestellt. Der pH-Wert der Suspension betrug 7,2, der Mahlgrad 50°SR. Die Stoffsuspension wurde anschliessend in fünf gleiche Teile geteilt und jeweils unter den folgenden Bedingungen zu Blättern einer Flächenmasse von 80 g/$m^2$ verarbeitet:

a) Es erfolgte kein weiterer Zusatz zur Stoffsuspension;
b) Zusatz von 0,5%, bezogen auf trockenen Faserstoff, des im Beispiel 1b) beschriebenen Neutralnassfestharzes;
c) Zusatz von 1,0%, bezogen auf trockenen Faserstoff, des im Beispiel 1b) beschriebenen Neutralnassfestharzes;
d) Zusatz von 0,5%, jeweils bezogen auf die Feststoffe, des Harzes 4 und
e) Zusatz von 1,0%, jeweils bezogen auf die Feststoffe, des Harzes 4.

Von sämtlichen, so hergestellten Papierblättern wurde die Trocken- und Nassreisslänge gemessen. Die Ergebnisse sind in Tabelle 2 angegeben.

TABELLE 2

| Versuch | Trockenreisslänge (m) | Nassreisslänge (m) | Nassreisslänge (m) gealtert 5 min 110°C |
|---|---|---|---|
| a) | 2420 | 0 | 0 |
| b) | 2570 | 390 | 590 |
| c) | 2890 | 520 | 900 |
| d) | 2750 | 475 | 580 |
| e) | 3050 | 714 | 910 |

*Beispiel 3*

Auf einer Versuchspapiermaschine mit einer Arbeitsbreite von 75 cm wurde bei einer Geschwindigkeit von 60 m/min ein Papier aus 80% gebleichtem Fichtensulfitzellstoff und 20% gebleichtem Buchensulfitzellstoff mit einer Flächenmasse von 80 g/$m^2$ produziert. Der pH-Wert der Stoffsuspension betrug 7,5, der Mischmahlgrad 35°SR. Unter den unten angegebenen Bedingungen a) bis g) wurden aus dieser Stoffsuspension Papiere hergestellt:

a) Es erfolgte kein Zusatz;
b) Zusatz von 0,25% des im Beispiel 1b) angegebenen Neutralnassfestharzes;
c) Zusatz von 0,5% des Harzes gemäss b);
d) Zusatz von 0,1% des Harzes gemäss b);
e) Zusatz von 0,25% des Harzes 4;
f) Zusatz von 0,5% des Harzes 4;
g) Zusatz von 1,0% des Harzes 4.

Die Prozentangaben beziehen sich jeweils auf die Feststoffe, d.h. der Stoffsuspension sowie der Harzlösungen. Der Zusatz der Harzlösungen gemäss a) bis g) erfolgte im Dickstoffbereich. Von den so hergestellten Papieren wurde die Nassreisslänge und die Laugenfestigkeit bestimmt. Die Messungen sind Mittelwerte aus Längs- und Querrichtung des Papiers zur Papiermaschine. Folgende Werte wurden erhalten:

TABELLE 3

| | Nassreisslänge (m) | Laugenfestigkeit 1% NaOH, 5 min 50°C |
|---|---|---|
| a) | 0 | 0 |
| b) | 340 | 240 |
| c) | 550 | 340 |
| d) | 840 | 470 |
| e) | 405 | 515 |
| f) | 580 | 735 |
| g) | 870 | 940 |

**Patentansprüche**

1. Verfahren zur Herstellung von Papier, Karton und Pappe mit hoher Trocken-, Nass- und Laugenfestigkeit durch Zusatz wässriger Polymerisatlösungen zum Papierstoff in einer Menge von 0,1 bis 5 Gew.-%, jeweils bezogen auf die Feststoffe, und Entwässern des Papierstoffs auf einem Sieb unter Blattbildung, dadurch gekennzeichnet, dass man als wässrige Polymerisatlösungen die Reaktionsprodukte einsetzt, die durch Umsetzung von

(1) Homopolymerisaten des Vinylimidazols der Formel I

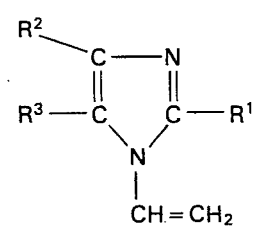

(I),

in der
$R^1$, $R^2$, $R^3$ = H, $CH_3$; und $R^1$ ausserdem $C_2H_5$, $C_3H_7$, $C_4H_9$ bedeuten oder von

(2) wasserlöslichen Copolymerisaten aus

a) mindestens 5 Gew.-% eines Vinylimidazols der Formel I,

b) bis zu 95 Gew.-% Acrylamid und/oder Methacrylamid sowie gegebenenfalls

c) bis zu 30 Gew.-% Acrylnitril, Methacrylnitril, Vinylacetat, Vinylpyrrolidon, einer $C_3$- bis $C_5$-ethylenisch ungesättigten Carbonsäure oder deren Ester

in Abwesenheit von Polyalkyleniminen mit Epichlorhydrin im Verhältnis von 0,02 bis 2,9 Mol Epichlorhydrin pro Mol basischem Stickstoffäquivalent im Homo- oder Copolymerisat erhalten werden.

2. Verfahren nach Anspruch 1, dadurch gekennzeichnet, dass man die Reaktionsprodukte einsetzt, die durch Umsetzung von wasserlöslichen Copolymerisaten aus

a) 15 bis 30 Gew.-% N-Vinylimidazol und

b) 85 bis 70 Gew.-% Acrylamid

in Abwesenheit von Polyalkyleniminen mit Epichlorhydrin enthalten werden.

## Revendications

1. Procédé pour la fabrication de papier et de carton à résistance élevée à l'état sec, à l'état humide et vis-à-vis des lessives par addition de solutions aqueuses de polymères à la pâte à papier, dans une proportion de 0,1 à 5% en poids sur la base des matières solides et par élimination de l'eau de la pâte à papier sur une toile avec formation d'une feuille, caractérisé en ce qu'on utilise, comme solutions aqueuses de polymères, les produits de réaction qui sont obtenus par réaction de

(1) Homopolymères du vinylimidazole de formule I

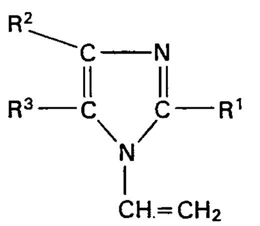

(I),

dans laquelle
$R^1$, $R^2$, $R^3$ = H, $CH_3$; $R^1$ pouvant en outre représenter $C_2H_5$, $C_3H_7$, $C_4H_9$, ou de

(2) Copolymères hydrosolubles formés à partir de

a) au moins 5% en poids d'un vinylimidazole de formule I,

b) jusqu'à 95% en poids d'acrylamide et/ou de méthacrylamide et, le cas échéant,

c) jusqu'à 30% en poids d'acrylonitrile, de méthacrylonitrile, d'acétate de vinyle, de vinylpyrrolidone, d'un acide carboxylique en $C_3$ à $C_5$ insaturé éthyléniquement ou d'un ester de celui-ci,

en l'absence de polyalkylène-imines, avec l'épichlorhydrine dans un rapport de 0,02 à 2,9 mol d'épichlorhydrine par mol d'équivalent d'azote basique dans l'homo- ou le copolymère.

2. Procédé selon la revendication 1, caractérisé en ce qu'on utilise les produits de réaction qui sont obtenus par réaction avec l'épichlorhydrine, de copolymères hydrosolubles de

a) 15 à 30% en poids de N-Vinylimidazole et

b) 85 à 70% d'acrylamide

en l'absence de polyalkylène-imines.

## Claims

1. A process for the production of paper, cardboard and board having high dry strength, wet strength and alkali resistance by adding an aqueous polymer solution to the paper stock in an amount of from 0.1 to 5% by weight, based in each case on the solids, and draining the paper stock on a screen to form sheets, wherein the aqueous polymer solution used is a reaction product obtained by reacting

(1) a homopolymer of a vinylimidazole of the formula I

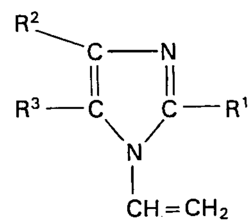

(I),

where
$R^1$, $R^2$ and $R^3$ are each H or $CH_3$, and $R^1$ may furthermore be $C_2H_5$, $C_3H_7$ or $C_4H_9$, or

(2) a water-soluble copolymer of

a) at least 5% by weight of a vinylimidazole of the formula I,

b) up to 95% by weight of acrylamide and/or methacrylamide and, if desired,

c) up to 30% by weight of acrylonitrile, methacrylonitrile, vinyl acetate, vinylpyrrolidone, an ethylenically unsaturated $C_3$-$C_5$-carboxylic acid or one of its esters,

with epichlorhydrin in a ratio of from 0.02 to 2.9 moles of epichlorhydrin per molar equivalent of basic nitrogen in the homopolymer or copolymer, in the absence of a polyalkyleneimine.

2. A process as claimed in claim 1, wherein the reaction product used is one which is obtained by reacting a watersoluble copolymer of

a) from 15 to 30% by weight of N-vinylimidazole, and

b) from 85 to 70% by weight of acrylamide

with epichlorohydrin, in the absence of a polyalkylene-imine.